# EUROPÄISCHE PATENTANMELDUNG

(11) **EP 2 378 098 A2**
(43) Veröffentlichungstag der Anmeldung: **19.10.2011**
(21) Anmeldenummer: 11158203.7
(22) Anmeldetag: 15.03.2011
(51) Int. Cl.: F02C 6/12

(54) **Dichtungsanordung im Gehäuse eines Abgasturboladers**

(30) Priorität: 15.04.2010 DE 102010015272
(71) Anmelder: Bosch Mahle Turbo Systems GmbH & Co. KG, 70376 Stuttgart (DE)
(72) Erfinder: Holzschuh, Christian, 70736, Fellbach (DE)
(74) Vertreter: BRP Renaud & Partner

(57) **Zusammenfassung**

Die vorliegende Erfindung betrifft eine Ladeeinrichtung (1), insbesondere einen Turbolader, mit einem Turbinengehäuse (2) und einem Lagergehäuse (3), in dem eine Lageranordnung für eine ein Turbinenrad und ein Verdichterrad tragende Welle angeordnet ist. Erfindungswesentlich ist dabei, dass eine Dichtung (6) im Kraftnebenschluss zwischen einer radial verlaufenden Planfläche (7) des Turbinengehäuses (2) und einer radial verlaufenden Planfläche (8) des Lagergehäuses (3) angeordnet ist, und dass die Dichtung (6) federnd ausgebildet ist.

## Beschreibung

Die vorliegende Erfindung betrifft eine Ladeeinrichtung, insbesondere einen Turbolader, mit einem Lagergehäuse und einem Turbinengehäuse gemäß dem Oberbegriff des Anspruchs 1.

Aus der US 7,134,836 B2 ist ein Turbolader nach dem Stand der Technik bekannt. Der Turbolader weist ein Lagergehäuse zur Lagerung einer Welle, ein Turbinengehäuse und ein Verdichtergehäuse auf. Um eine Leckage der heißen Abgase zu verhindern, ist zwischen dem Turbinengehäuse und dem Lagergehäuse eine Flachdichtung vorgesehen.

Aus der EP 2 055 911 A1 ist ebenfalls ein Turbolader beschrieben, bei dem eine Flachdichtung zwischen einem Turbinengehäuse und einem Lagergehäuse angeordnet ist.

Eine Flachdichtung nach dem Stand der Technik würde aufgrund ihrer Bauweise beim Zusammenbau bereits plastisch verformt werden und weist aufgrund dieser Vorschädigung eine zu geringe Rückfederfähigkeit auf. Als Folge kommt es zum Abblasen zwischen dem Lagergehäuse und dem Turbinengehäuse, was die thermodynamische Funktion des Abgasturboladers beeinträchtigt und sich negativ auf die Emission und Betriebssicherheit des Laders auswirkt.

Die vorliegende Erfindung beschäftigt sich daher mit dem Problem, für einen Turbolader der gattungsgemäßen Art eine verbesserte oder zumindest eine alternative Ausführungsform anzugeben, die insbesondere die im Stand der Technik genannten Nachteile nicht aufweist.

Dieses Problem wird erfindungsgemäß durch den Gegenstand des unabhängigen Anspruchs gelöst. Vorteilhafte Ausführungsformen sind Gegenstand der abhängigen Ansprüche.

Die vorliegende Erfindung beruht auf dem allgemeinen Gedanken, eine Dichtung im Kraftnebenschluss zwischen einem Turbinengehäuse und einem Lagergehäuse einzubauen und federnd auszubilden. Besonders vorteilhaft ist die federnde Dichtung als Tellerfeder ausgebildet. Die Tellerfeder besteht vorzugsweise aus einem hitzebeständigen Stahlwerkstoff. Die hohe Flexibilität einer als Tellerfeder ausgebildeten Dichtung gewährleistet eine betriebssichere Abdichtung des Spalts zwischen dem Lagergehäuse und dem Turbinengehäuse. Die Dichtung kann zur Erhöhung der Mikroabdichtwirkung an ihren Kontaktflächen mit einer hitzebeständigen Beschichtung versehen werden.

In einer vorteilhaften Ausführungsform der Erfindung sind zumindest zwei Tellerfedern hintereinander (radial beabstandet) im Kraftnebenfluss eingebaut.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
Fig. 1 eine Ladeeinrichtung mit einer erfindungsgemäßen Dichtung,
Fig. 2 eine vergrößerte Darstellung der Dichtung in Fig. 1,
Fig. 3 eine erfindungsgemäße als Tellerfeder ausgebildete Dichtung
Fig. 4 eine Ladeeinrichtung mit einer erfindungsgemäßen Dichtung vor dem Zusammenbau.

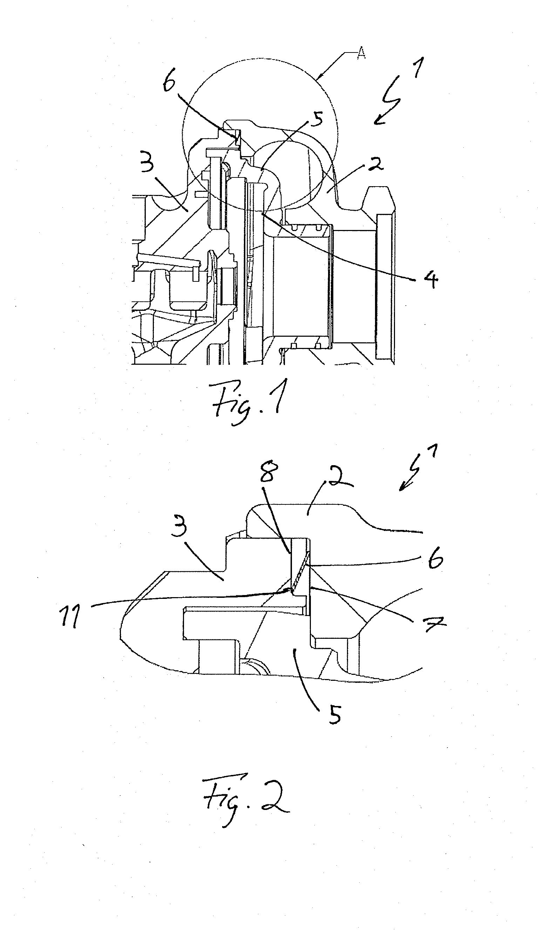

Entsprechend der Fig. 1, weist eine Ladeeinrichtung 1, insbesondere ein Abgasturbolader, zumindest ein Turbinengehäuse 2 und ein Lagergehäuse 3 auf. Das Lagergehäuse 3 dient zur Lagerung einer Welle (nicht gezeigt). Das Turbinengehäuse 2 führt Abgase zu einer Düse 4 stromauf eines Turbinenrads (nicht gezeigt). Zwischen dem Turbinengehäuse 2 und dem Lagergehäuse 3 ist ein Leitschaufelkäfig 5 angeordnet, vorzugsweise eingeklemmt. Der Leitschaufelkäfig 5 bildet eine sich radial erstreckende Seitenwand der Düse 4.

Wie in Figur 2 verdeutlicht ist, befindet sich der Leitschaufelkäfig 5 durch diesen Einbau im Krafthauptschluss. Erfindungsgemäß liegt nun eine federnde Dichtung 6 in dem sich beim Zusammenbau der Bauteile resultierenden Spalt zwischen dem Lagergehäuse 3 und dem Turbinengehäuse 2 und ist somit im Kraftnebenschluss verbaut. Die federnde Dichtung 6 ist vorzugsweise eine Tellerfeder. Eine Tellerfeder bietet eine Abdichtung, die im Vergleich zu einer V-Dichtung oder einer C-Dichtung bei hohen Ansprüchen ein verbessertes Federverhalten aufweist und einfach herstellbar ist. In Figur 2 ist die Tellerfeder im verspannten Zustand dargestellt. Die Tellerfeder liegt, wie in Figur 2 dargestellt ist, einerseits an der radial verlaufenden Planfläche 7 des Turbinengehäuses 2 und andererseits an der radial verlaufenden Planfläche 8 des Lagergehäuses 3 an. Die Tellerfeder dichtet durch die Anlage an beiden parallelen Planflächen 7, 8 der Bauteile Lagergehäuse 3 und Turbinengehäuse 2 den Zusammenbau ab. Die hohe Flexibilität der Tellerfeder gewährleistet eine betriebssichere Abdichtung des radial verlaufenden Spalts zwischen dem Lagergehäuse 3 und dem Turbinengehäuse 2. Die Tellerfeder ist vorzugsweise im Wesentlichen kegelstumpfförmig ausgebildet.

In Figur 2 liegt die Tellerfeder frei in einem radialen Einstich 11 im Flansch des Lagergehäuses 3. Diese Ausführung hat vor allem Vorteile bei der Montage, da die Dichtung 6 radial am Innendurchmesser geführt ist und bei der Montage nicht radial verrutschen kann und es zu keinem Verklemmen des Turbinengehäuses 2 bei der Montage kommen kann.

Die Tiefe des radialen Einstiches 11 ist ausschlaggebend für die Vorspannung der Tellerfeder. Die Vorspannung der Tellerfeder ist individuell auf den Einsatzfall anzupassen.

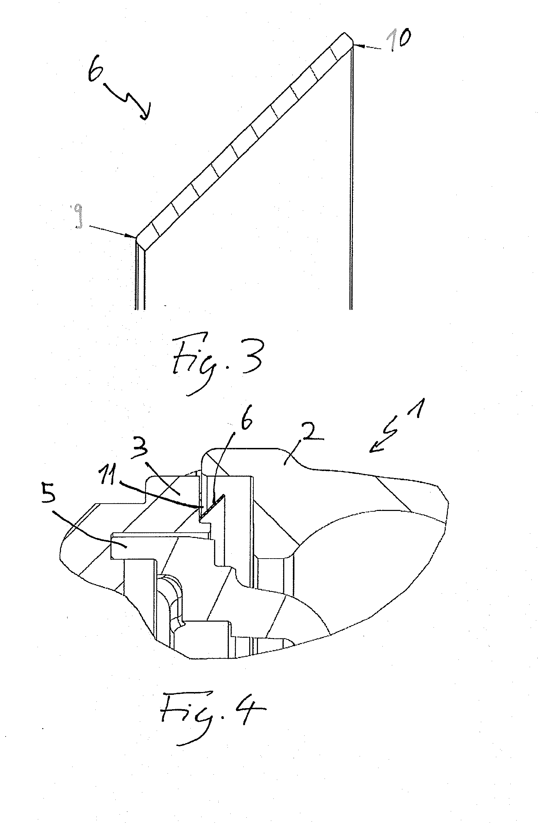

Figur 4 zeigt exemplarisch eine weitere Ausführung der Dichtungsanordnung vor dem Zusammenbau des Lagergehäuses 3 mit dem Turbinengehäuse 2. Die Tellerfeder liegt auf dem Lagergehäuse 3 auf, das Turbinengehäuse 2 wird über den Flansch des Lagergehäuses bis auf Anschlag am Leitschaufelkäfig 5 geschoben. Hierdurch wird die Tellerfeder vorgespannt und dichtet durch die Anlage an beiden Planflächen 7, 8 der Bauteile Lagergehäuse 3 und Turbinengehäuse 2 den Zusammenbau ab. Das Turbinengehäuse 2 wird soweit auf das Lagergehäuse 3 geschoben bis der Leitschaufelkäfig 5 vollständig an beiden Bauteilen Lagergehäuse 3 und Turbinengehäuse 2 anliegt.

Die angedachte Tellerfeder weist aufgrund ihrer Bauform eine ausreichend hohe Rückfederfähigkeit auf, um einen im Einsatz sich verändernden Spalt ausreichend abzudichten.

In Figur 4 liegt die Tellerfeder frei in einem radialen Einstich 11 im Flansch des Lagergehäuses 3 vor dem Zusammenbau mit dem Turbinengehäuse 2 auf. Hierbei liegt die Tellerfeder am Innendurchmesser der Tellerfeder auf der Planfläche 8 des Lagergehäuses 3. Alternativ kann die Tellerfeder in einer Nut auf dem Lagergehäuse 3 aufliegen. Denkbar wäre es auch, dass die dem Turbinengehäuse 2 zugewandte Endfläche des Flansches eben ausgebildet ist, d.h. ohne Einstich 11 oder Nut für die Tellerfeder.

In Figur 4 ist eine nach außen geneigte Form der Tellerfeder dargestellt. Alternativ kann die Tellerfeder auch eine nach innen geneigte Form aufweisen. Die Dichtung 6, das heißt die Tellerfeder, kann aus einem hitzbeständigen Stahlwerkstoff bestehen. Alternativ ist aufgrund der vorherrschenden Temperaturen eine Nickel-Basis-Legierung zu bevorzugen. Des weiteren, kann die Dichtung 6 zur Erhöhung der Mikroabdichtwirkung ihrer Kontaktflächen 9, 10 mit einer hitzebeständigen Beschichtung versehen werden.

Es ist bei der Auslegung der Tellerfeder darauf zu achten, dass diese entsprechend steif ausgeführt wird, um die Entstehung eines möglichen Krafthauptschlusses bei bestimmten Betriebspunkten zu vermeiden. Als Folge würde der Käfig 5 im Betrieb seine Verspannung verlieren und die Funktion einer variablen Turbinengeometrie nachteilig beeinflussen.

In Figur 3 ist eine Tellerfeder nach einer besonders vorteilhaften Ausführungsform der Erfindung dargestellt. Um ein mögliches Eingraben der Tellerfeder 6 an den beiden Planflächen 7, 8 am Lagergehäuse 3 und am Turbinengehäuse 2 unter der Beanspruchen im Betrieb (mechanische und thermische Belastung) zu reduzieren bzw. auszuschließen ist in einer vorteilhaften Ausführung an den die mit den Planflächen 7, 8 in Kontakt befindlichen Kanten der beim Stanzen/Feinschneiden entstehende Grat zu entfernen. Besonders bervorzugt ist eine Verrundung der Kontaktflächen 9, 10 der Tellerfeder mit dem Lagergehäuse 3 und dem Turbinengehäuse 2, da sich hierdurch die Tellerfeder im Betrieb auf den Planflächen 7, 8 abrollen kann. Hierdurch wird die Dichtwirkung der Tellerfeder im Betrieb über Laufzeit der Ladeeinrichtung 1 aufrechterhalten.

## Patentansprüche

1. Ladeeinrichtung (1), insbesondere ein Turbolader, mit
- einem Turbinengehäuse (2),
- einem Lagergehäuse (3), in dem eine Lageranordnung für eine ein Turbinenrad und ein Verdichterrad tragende Welle angeordnet ist,
**dadurch gekennzeichnet,**
- **dass** eine Dichtung (6) im Kraftnebenschluss zwischen einer radial verlaufenden Planfläche (7) des Turbinengehäuses (2) und einer radial verlaufenden Planfläche (8) des Lagergehäuses (3) angeordnet ist,
- **dass** die Dichtung (6) federnd ausgebildet ist.

2. Ladeeinrichtung nach Anspruch 1,
**dadurch gekennzeichnet,**
**dass** die Dichtung (6) als Tellerfeder ausgebildet ist.

3. Ladeeinrichtung nach Anspruch 1 oder 2,
**dadurch gekennzeichnet,**
**dass** die Dichtung (6) aus Metall, vorzugsweise aus einem hitzbeständigen Stahlwerkstoff oder aus einer Nickel-Basis-Legierung ausgebildet ist.

4. Ladeeinrichtung nach Anspruch 2 oder 3,
**dadurch gekennzeichnet,**
**dass** die Tellerfeder zumindest an einer Kontaktstelle mit dem Turbinengehäuse (2) und dem Lagergehäuse (3) abgerundete Kontaktflächen (9, 10) aufweist.

5. Ladeeinrichtung nach einem der Ansprüche 1 bis 4,
**dadurch gekennzeichnet,**
**dass** die Dichtung (6) in einem radialen Einstich (11) im Flansch des Lagergehäuses (3) angeordnet ist.

6. Ladeeinrichtung nach einem der Ansprüche 1 bis 5,
**dadurch gekennzeichnet,**
**dass** zwischen dem Turbinengehäuse (2) und dem Lagergehäuse (3) ein Leitschaufelkäfig (5) im Krafthauptschluss angeordnet ist, der eine sich radial erstreckende Seitenwand einer Düse (4) bildet.

7. Ladeeinrichtung nach einem der Ansprüche 4 bis 6,
**dadurch gekennzeichnet,**
**dass** die Dichtung (6) an ihrer Kontaktfläche (9, 10) mit einer hitzebeständigen Beschichtung versehen ist.

8. Ladeeinrichtung nach einem der Ansprüche 1 bis 7,
**dadurch gekennzeichnet,**
**dass** die Dichtung (6) durch zumindest zwei Tellerfedern gebildet ist.
